# EUROPEAN PATENT SPECIFICATION

(11) **EP 2 208 336 B1**
(45) Date of publication and mention of the grant of the patent: **07.03.2018**
(21) Application number: 08785727.2
(22) Date of filing: 27.08.2008
(51) Int. Cl.: H04L 29/06

(54) **METHOD AND SYSTEM FOR PERFORMING DELEGATION OF RESOURCES**
VERFAHREN UND SYSTEM ZUR LEISTUNGSDELEGATION VON RESSOURCEN
PROCÉDÉ ET SYSTÈME POUR DÉLÉGATION DE RESSOURCES

(30) Priority: 27.08.2007 EP 07016737
(43) Date of publication of application: 21.07.2010
(73) Proprietor: NEC Corporation, Tokyo 108-8001 (JP)
(72) Inventor: ABBADESSA, Daniele, 69126 Heidelberg (DE); GIRAO, Joao, 67063 Ludwigshafen (DE)
(74) Representative: Patent- und Rechtsanwälte Ullrich & Naumann
(86) International application number: PCT/EP2008/007029
(87) International publication number: WO 2009/027082

(56) References cited:
- EP-A- 1 646 176
- US-A1- 2002 083 014
- US-A1- 2003 145 223
- US-A1- 2004 034 770
- FREUDENTHAL E ET AL: "dRBAC: distributed role-based access control for dynamic coalition environments" PROCEEDINGS OF THE 22ND. INTERNATIONAL CONFERENCE ON DISTRIBUTED COMPUTING SYSTEMS. ICDCS 2002. VIENNA, AUSTRIA, JULY 2 - 5, 2002; [INTERNATIONAL CONFERENCE ON DISTRIBUTED COMPUTING SYSTEMS], LOS ALAMITOS, CA : IEEE COMP. SOC, US, vol. CONF. 22, 2 July 2002 (2002-07-02), pages 372-381, XP010595553 ISBN: 978-0-7695-1585-4

## Description

The present invention relates to a method for performing delegation of resources, in particular services, wherein a user - resource owner - has access to a resource offered by a service provider and wherein the resource is delegated to at least one other user - delegate - by using delegation credentials, issued by the service provider and comprising a private key.

Furthermore, the present invention relates to a system for performing delegation of resources, in particular services, the system comprising a service provider for offering a resource, wherein a user - resource owner - has access to the resource, and wherein the resource is delegated to at least one other user - delegate - by using delegation credentials, issued by the service provider and comprising a private key.

The preferences and data related to each person or individual makes it somehow difficult to distinguish between an account at an ISP (Internet Service Provider) and a subscription related to a service offered by that ISP. It is more common that the transport subscription (network access) is shared and separate service provider subscriptions are held since a person's profile is linked to the subscription. In a federated identity environment the user's profile is linked to different subscriptions. Although that is a well known problem which already has solutions, like those proposed in Liberty Alliance (see for reference http://www.projectliberty.org) and OpenID (http://www.openid.net), the problem of sharing a subscription by means of delegation is still an open field.

It is therefore an object of the present invention to improve and further develop a method and a system of the initially described type for performing delegation of resources in such a way that users are allowed to share their access to resources with others in a way which preserves the users' privacy and allows a tight control on the delegation process and circumstances.

In accordance with the invention the aforementioned object is accomplished by a method comprising the features of claim 1. According to this claim, such a method is characterized in that the method comprises the following steps:
the resource owner employs said delegation credentials for configuring authorization rules for a delegate at an identity provider and gives the private key to the delegate,
the service provider authenticating the delegate based on said delegation credentials, wherein the service provider, upon the delegate contacting the service provider for a resource, contacts the identity provider to authenticate the delegate, and wherein, upon successful authentication by the identity provider, the service provider requests the delegate to authenticate himself by employing a challenge-response protocol on the basis of said private key, and
an authorization of the delegate is performed at the identity provider based on said authorization rules.

Furthermore, the aforementioned object is accomplished by a system comprising the features of independent claim 9. According to this claim, such a system is characterised in that the system further comprises
an identity provider, which is configured to enable a resource owner to employ said delegation credentials for configuring authorization rules for a delegate,
means for allowing the resource owner to give the private key to the delegate,
said service provider is configured to perform an authentication of the delegate based on said delegation credentials, wherein the service provider, upon the delegate contacting the service provider for a resource, is adapted to contact the identity provider to authenticate the delegate, and wherein, upon successful authentication by the identity provider, the service provider is adapted to request the delegate to authenticate himself by employing a challenge-response protocol on the basis of said private key,
said identity provider is configured to perform an authorization of the delegate based on said authorization rules.

According to the invention it has first been recognized that existing mechanisms do not provide for a sufficiently flexible and secure possibility of sharing resources by means of delegation. The present invention deals with how to combine identity management functions, service provider subscription management and cryptographic primitives to produce a method and a system which allow users to delegate subscriptions or payment to other users. While the power to authenticate the user and confirm the delegation remains with the service provider, the identity provider is still capable of granting or denying access based on access control rules, i.e. authorization rules. This process separates authentication from authorization which adds flexibility to the system. The service provider does not necessarily need to know the rules of authorization and the identity provider might not be part of the authentication of the user for service access.

Furthermore, the partition of authentication and authorization for service consumption also permits the added privacy benefit that the service provider does not need to know the delegate user, simply his relation to the subscriber. The usual way of supporting multiple users under the same subscription according to prior art either involves the knowledge on the server provider side of this linking or the sharing of credentials (and therefore non-distinction) of the different users. By employing delegation credentials in form of cryptographic primitives, such as signing and verifying messages and certificates, the sanity and security of the method and the system according to the invention is ensured.

It is provided a flexible delegation method and system which allow for multiple configurations and the control of the account user on the different delegations. This would mean that the resource or subscription holder does not simply provide the credentials or identity of the user but may rather ask the service to issue new credentials which he links to his subscription. These credentials can then be used by the delegated entity to access the service. Since this new user is not directly involved in the transaction, the service provider knows he is allowed by the resource holder or subscriber to use that account but not necessarily who he is (responsibility falls upon the subscriber).

The method and the system according to the invention constitute a centralized delegation management and result in the advantages of easier subscription management, which is simple to handle from the user's perspective, enhancement of the privacy of its users (protecting the delegates' identity, while maintaining strong security parameters, in terms of the identity of the delegates) and the provision of identity providers with new business models.

According to a preferred embodiment the authorization rules defined for a delegate may be registered at the identity provider, thereby employing said delegation credentials. The authorization rules may grant a delegate full access to a resource with no constraints. On the other hand, it is possible that the authorization rules defined for a delegate include resource access restrictions.

According to a further preferred embodiment the access to a resource may be established by the resource owner holding a subscription to a service. The resource owner may e.g. directly subscribe to a service offered by the service provider.

Preferably, the delegation credentials are issued and verified (in the authentication process) by the service provider. In case of a delegation, it may be provided that the delegation credentials are handed over from the resource owner, e.g. the subscription holder, to the delegate. In other words, the service provider holds the power of authentication. It holds, generates and checks the credentials used by the delegate to access the service. However, the access control policies which provide authorization (in which cases access can be granted) are separate and may be stored at the identity provider. The benefit is that the service provider does not need to handle the authorization rules (usually based on groups, context, etc which are outside the realm of the service provider), and simply deals with the authentication and binding of the user to the subscription.

With respect to high security, it may be provided that the authentication of the delegate at the service provider is performed on the basis of the delegation credentials. Alternatively or additionally, upon the delegate requesting the service at the service provider, an authentication of the delegate may be performed at the identity provider on the basis of the delegation credentials. Moreover, an authorization may be performed at the service provider, resulting in a liability benefit, as the identity provider can claim, since part of the authorization is done at the service provider, it cannot be liable for any user misconduct.

According to a preferred embodiment, user accounts may be provided at the identity provider, wherein each account is linked to another digital identity of the user. In such case, authorization rules defined for a delegate may be defined in a digital identity specific manner. In particular, it may be provided that the authentication of a delegate at the service provider is based upon the digital identity of the delegate. Specifically, it may be provided that one digital identity is allowed to access or to use a resource/service, wherein such access/usage is denied for another digital identity. In this context, it is important to note a clear separation between the user's digital identity and the physical one. Since one physical person may have multiple digital identities, it might be that, in some cases, it cannot access a service with one digital identity but can with another.

It is to be noted that the identity provider can also be used to handle access control for multiple services at the same time. So the same authorization rules can be used under different credentials to access different services by the same user under the same delegation. On the other hand, general authorization rules may be specified which can apply to more than one delegation. In any case, the resource holder can change delegation authorization without contacting the service provider.

Different instantiations are possible where the access control property changes. For example, the resource holder may base his authorization rules on several aspects. In particular, they may be based on the type of service that is to be delegated. Furthermore, a time may be specified during which a delegate is allowed to access the resource to be delegated. Further, the user may be specified, wherein the digital identities of the user may be taken into consideration. Moreover, the costs of accessing or using a resource/service may be specified within the authorization rules, e.g. in terms of specifying a cost limit. The listed criteria are to be understood as examples only, i.e. further criteria that might be considered for defining the authorization rules may be envisioned and may be specified according to specific needs and requirements.

According to a preferred embodiment, which provides high security and which is readily to implement, the delegation credentials may include a certificate and a secret key. Each entity, to which the key is handed over in the context of a delegation, will then be able to use the delegated resource.

As regards a readily handling of the authorization, it may be provided that the authorization information is centralized at the identity provider, wherein the information is aggregated per each delegate. Alternatively or additionally, the authorization information may be centralized at the identity provider aggregated per each service. However, distributed management of the authorization rules is also possible.

There are several ways how to design and further develop the teaching of the present invention in an advantageous way. To this end, it is to be referred to the patent claim subordinate to patent claims 1 and 9 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawings
- Fig. 1: is a schematic view of an example household with multiple identities,
- Fig. 2: illustrates a scenario with various delegation examples, in which the method according to the present invention is applicable,
- Fig. 3: shows an example of a message sequence chart according to a first embodiment of the present invention,
- Fig. 4: illustrates an application scenario according to an embodiment of the present invention,
- Fig. 5: illustrates schematically a service access by a delegate,
- Fig. 6: shows the message flow within a setup phase, in which a user sets up a delegation, and
- Fig. 7: shows the message flow within a service consumption phase, in which a delegate accesses a delegated service.

In the following a specific use case scenario for delegation within the IPTV area is specified. The delegation in mind deals with the special case of sharing of subscriptions to services. The use case introduces an Identity Management platform as an overseeing entity which deals with the access control in delegation scenarios.

In today's typical IPTV scenarios, user subscriptions to base services are usually shared since there is no particular authentication per-user to the service. It is to be expected that with the proliferation of Identity Management and personalized services, this will change. The user subscription, which was so far the identifier of the users' access to services, will no longer suffice.

IPTV supports services far beyond those currently offered by digital television. These services include, on top of those already offered by today's systems, IP telephony, gaming services and even access to 3^{rd} party services. The interaction of the IPTV provider with external services is an important aspect dealt with in the use-case detailed in the following.

Users must manage all the different subscriptions to IPTV providers and service providers, whether they are offered by the same operator or by 3^{rd} party providers, independently. Identity Management can offer a common platform to ease the users' account management. In particular, since services which interact with identity management platforms are usually also dependent in the concept of identity, the management of user subscriptions bound to different digital identities is another axis to the problem.

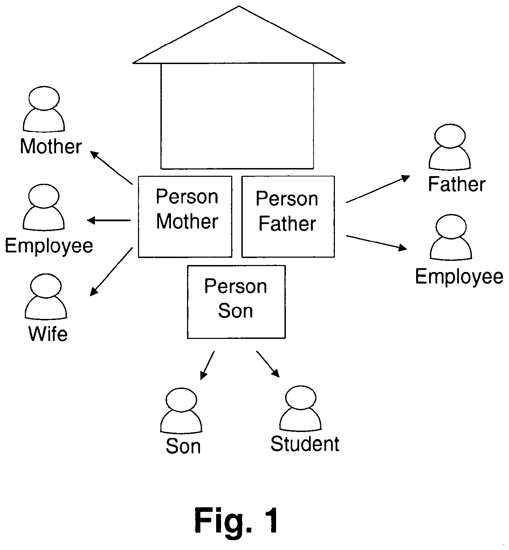

In the described scenario it is assumed that a user and its digital representation, or virtual identity (VID), are distinct entities. A user holds the subscription, which is the contractual bound between it and its service provider, but can then associate it, as needed, to its VIDs. In Fig. 1, a household is represented, which will be used to describe an IPTV related embodiment of a method according to the present invention. Different users, who can establish contracts and create subscriptions to services, are represented in Fig. 1, as well as their digital identities with which they will be recognized in these services, hold personalization and history information as well as possibly authentication credentials. More specifically, the illustrated household includes three persons, which are a father, a mother and a son. The digital identities of these persons refer to their familiar as well as to their professional. For instance, the father has associated the digital identities "father" (with respect to his familiar background) and "employee" (with respect to his professional background). As what concerns the person of the mother, two family related digital identities are provided, which are "mother" and "wife". It is to be noted that the digital identities shown in Fig. 1 are chosen for illustrative purposes only and that many other digital identities, which relate to various user context (memberships, sports, etc.) can be envisioned.

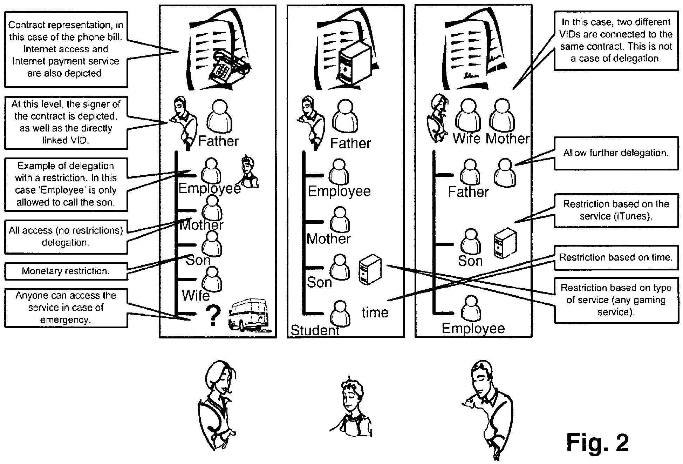

In Fig. 2 some possible delegation scenarios which may appear e.g. in the context of IPTV are detailed. In the upper part of Fig. 2 three different resources or services are depicted, which are a telephony service (left), an Internet service (middle) and a credit card based billing or purchase service (right). In the case of the billing service, the user, i.e. the mother in the illustrated case, may delegate the power to use his/her account to pay for other services or e-commerce.

Below the services, the holder of the account and main digital identity responsible for the subscription is shown. In some cases more than one digital identity may be directly linked to the subscription. The subscriber delegates the use of the subscription to other digital identities; some which belong to themselves and others to other trusted entities. In the use case illustrated in Fig. 2, the form by which the user creates the subscription is somewhat an orthogonal problem to mapping it to digital identities.

In the example shown in the left of Fig. 2, the father, who is the subscriber for the telephony service, fully delegates the service subscription to the mother. Authenticated to the telephony service as 'mother', this user would have full access to the service, which would then be billed under the father's account.

One extension to the delegation problem is the fact of adding more complex access control rules per-delegation. Taking the example above, the subscriber to the telephony service, 'father', delegates usage of the phone service to the 'son' but restricts the amount of money the user 'son' can spend on the service. Another restricted delegation is shown with respect to the father authenticated as "employee", who is only allowed to call the son. With respect to the Internet service, the son is underlying two different restrictions: in his identity as son, the restriction is based on the specific type of service (e.g. in that access to certain gaming services is denied), in his identity as student on the other hand, the restriction is based on time (e.g. access is granted during certain hours of daytime only).

It is to be noted that according to the specific embodiment of Fig. 2 the delegation with respect to the purchase service is implemented in such a way that the father in his identity as father is entitled, as delegate, to allow for further delegation. The son in his identity as son is again underlying restrictions, in this case with respect to the specific service.

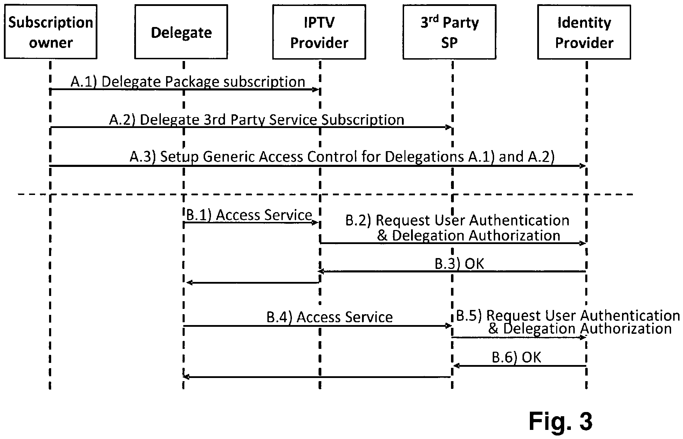

In Fig. 3 a message sequence chart for the specific case of delegation in IPTV is illustrated. The chart includes messages which belong to a sequence referred to as setup phase (messages shown above the dashed line) and messages which belong to a subsequent sequence referred to as service usage phase (below the dashed line). It is assumed that the subscription owner already has a subscription to both the IPTV provider and to the 3^{rd} party service provider.

### Setup phase:

A.1) In this step the owner of the subscription creates a link at the IPTV provider, which allows another user to use the owner's account, provided the IPTV provider abides to access control rules at the Identity Provider.
A.2) A similar operation is performed with the 3^{rd} party Service Provider.
A.3) The owner of the subscription sets up access control rules at the Identity Provider. This operation can be seen as adding "authenticated" information to the profile of the delegates or giving the delegates the credentials for them to add to their own profiles. It is to be noted that in this step the user can setup generic access control policies which affect both services, which is one of the advantages of using an Identity Management system to perform the access control.

### Service consumption phase:

B.1) The delegate accesses an IPTV service.
B.2) The IPTV service provider contacts the Identity Provider (which can be also in the IPTV operator's domain) to authenticate the user. It is to be assumed, in this case, that the user is already authenticated with its Identity Provider; otherwise the authentication could occur at this time.
B.3) Once the Identity Provider can verify that the user is authenticated, it will verify the access control restrictions on access to that service using that delegation. Based on this, it will allow or deny access to the service.

The IPTV provider might, additionally, check for other access control credentials related to the service delegation before providing access to the user.

Steps B.4), B.5) and B.6) portrait a similar scenario which involves a 3^{rd} party service provider. It is to be noted that the authorization control is mainly performed by the Identity Management system and policies can be shared amongst delegations (reducing the effort in user-subscription management).

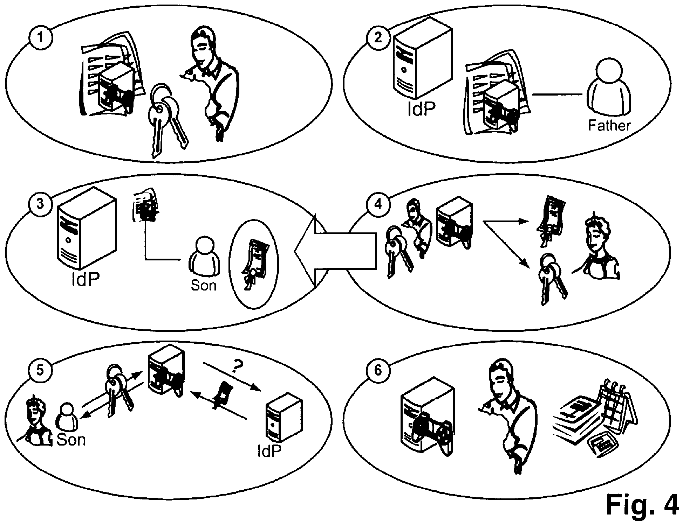

Fig. 4 illustrates an application scenario according to another embodiment of the present invention. In a first step a user subscribes to a service which issues credentials to access and manage his subscription. In step 2, the user requests the service to delegate his subscription and receives a set of credentials (a certificate and a private key) from the service provider. Whoever has the private key will be able to use the delegation.

In step 3, either the delegate or the owner of the subscription setup their identity management system to account for the delegation. This means the Identity Management system is made aware that this delegation belongs to the son (in our scenario). Also in step 3, the owner might decide to setup extra access control rules, which are the separated authorization for the delegation. In step 4 the owner provides the delegate with the secret key with which the delegate can access the service using that subscription. Step 5 demonstrates how the service can be accessed and is further detailed below. Finally, the subscriber receives the bill for the joint usage of his subscription by every delegation and himself.

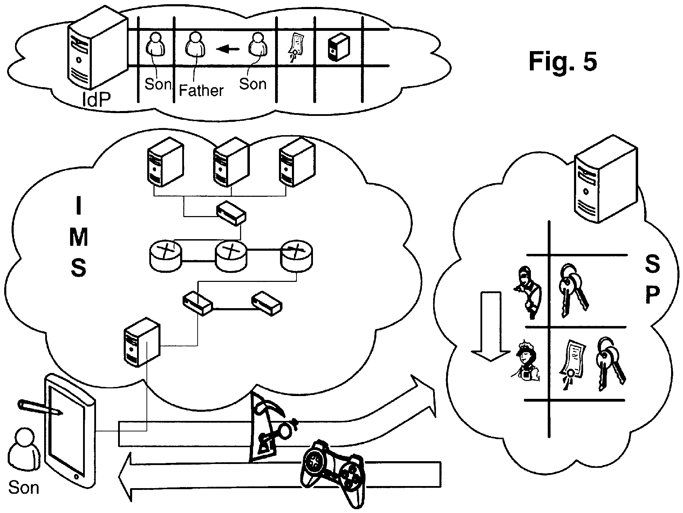

Fig. 5 illustrates schematically a service access by a delegate. More specifically, the service is a gaming service offered by the Service Provider SP, wherein the father (e.g. from the previously explained application examples) is the subscription holder who delegates the service onto his son.

The Service Provider SP holds information about the subscription of the father including delegation credentials, which have been issued by the Service Provider SP, e.g. after subscription. By employing the credentials the father configures the Identity Provider IdP. In the specific case shown in Fig. 5, an entry is generated at the IdP including the delegate "son", a link between the son and the father indicating the originator of the delegation, the certificate issued by the Service Provider SP including e.g. the service name and, finally, a set of rules configured on that certificate. In other words, at the IdP the digital identity of the delegate is linked with the service and the certificate for delegation.

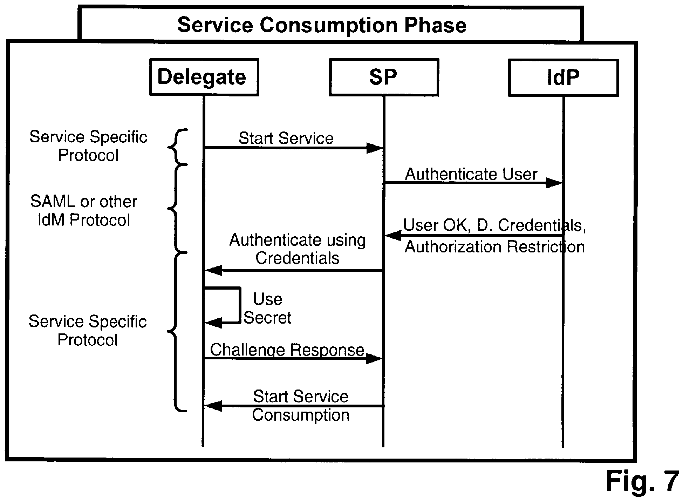

Once the Service Provider SP and the Identity Provider IdP are configured as described above, the father can give the secret key of the delegation credentials to the son since the delegation is now active. When the son contacts the Service Provider SP and asks for the service (indicated by the upper arrow directed from the son to the SP), the SP will contact the IdP to authenticate the son. This step is described in some more detail with respect to Fig. 7. After a successful authentication towards the SP based on the certificate of the delegation the son is granted access to the service (thereby taking into consideration the authorization rules configured for that service and for that delegate at the IdP) and the service consumption can start (indicated by the lower arrow directed from the SP to the son).

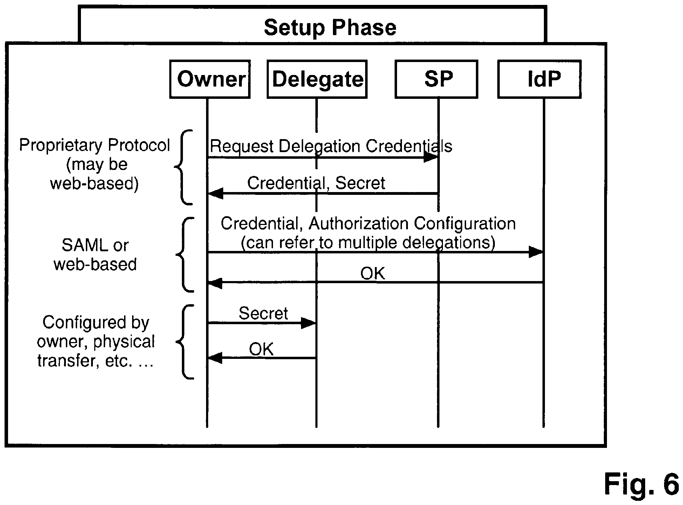

Fig. 6 portraits the message flow of the setup phase, when the resource owner sets up the delegation. At first he contacts the service provider and authenticates using his credentials (such a mechanism is outside the scope of this invention). The resource owner is then issued a set of credentials - a certificate and a secret key (corresponding to the public key in the certificate). To this end a proprietary, e.g. web-based, protocol of the respective service provider may be employed. The two cryptographic keys can then be used by means of asymmetric cryptography to verify the validity of the user trying to access the delegation.

Once the owner has these keys in his possession he configures the Identity Management system of the delegate by sending the certificate and configuring a set of rules on that certificate. In this step he can also present more than one certificate and set joint delegation rules for all those delegations. For instance, to this end SAML (Security Assertion Markup Language) or a web-based protocol may be employed.

It is to be noted that this does not present a security risk since: the attack would be to offer delegation to subscriptions which the delegate does not want (this does not offer a privacy or any other danger to the delegate) and that since the certificate is issued by the service provider and contains the identity of the owner, the Identity Provider can authenticate the owner either locally or at the owner's identity provider before he allows him to set delegation rules. This mechanism is also outside the scope of this invention. Once the Service and Identity Providers are configured, the owner can now give the secret key to the delegate (e.g. by means of a physical transfer), since the delegation is now active.

Fig. 7 illustrates the delegate trying to access a service which has been delegated onto him. The first step is to contact the service provider (by employing a service provider specific protocol) and ask for the service. As in a normal identity management scenario, the SP will contact the Identity Provider to authenticate the user. As part of this authentication, the IdP will recognize the delegation and check for further rules associated to it. If applicable, the Identity Provider will send, together with the authentication result of the delegate, extra restrictions on the delegation to the SP and the certificate of the delegation (this step might be replaced with a simple reference to the certificate since, as the issuer, the SP can also store the certificate).

The SP will then contact the delegate and request that he authenticates (a second time) based on the certificate of the delegation. This step ensures that the delegate did not copy the delegation but is the true delegate. The delegate can then use the secret key to answer the challenge from the SP and service consumption can start. Since the SP can associate the delegation with the owner's account, the owner will be also billed for the services accessed by the delegate.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for performing delegation of resources, wherein a user - resource owner - has access to a resource offered by a service provider and wherein the resource is delegated to at least one other user - delegate - by using delegation credentials, issued by the service provider and comprising a private key,
**characterized in that** the method comprises the following steps:
the resource owner employs said delegation credentials for configuring authorization rules for a delegate at an identity provider and gives the private key to the delegate,
the service provider authenticating the delegate based on said delegation credentials, wherein the service provider, upon the delegate contacting the service provider for a resource, contacts the identity provider to authenticate the delegate, and wherein, upon successful authentication by the identity provider, the service provider requests the delegate to authenticate himself by employing a challenge-response protocol on the basis of said private key, and
an authorization of the delegate is performed at the identity provider based on said authorization rules.

2. Method according to claim 1, wherein said authorization rules defined for a delegate include resource access restrictions.

3. Method according to claim 1 or 2, wherein user accounts are provided at the identity provider, each account being linked to another digital identity of the user.

4. Method according to claim 3, wherein said authorization rules defined for a delegate are defined in a digital identity specific manner.

5. Method according to claim 3 or 4, wherein the authentication of the delegate at the service provider is based upon the digital identity of the delegate.

6. Method according to any of claims 1 to 5, wherein said authorization rules are based on the type of resource/service, time, user costs of resource/service and/or the like, and/or
wherein said authorization rules relate to the allowance or denial of further delegation.

7. Method according to any of claims 1 to 6, wherein said delegation credentials include a certificate and said private key.

8. Method according to any of claims 1 to 7, wherein the authorization information is centralized at the identity provider aggregated per each delegate, and/or
wherein the authorization information is centralized at the identity provider aggregated per each service.

9. System for performing delegation of resources, the system comprising:
a service provider for offering a resource, wherein a user - resource owner - has access to the resource, and wherein the resource is delegated to at least one other user - delegate - by using delegation credentials, issued by the service provider and comprising a private key,
**characterized in that** the system further comprises
an identity provider, which is configured to enable a resource owner to employ said delegation credentials for configuring authorization rules for a delegate,
means for allowing the resource owner to give the private key to the delegate,
said service provider is configured to perform an authentication of the delegate based on said delegation credentials, wherein the service provider, upon the delegate contacting the service provider for a resource, is adapted to contact the identity provider to authenticate the delegate, and wherein, upon successful authentication by the identity provider, the service provider is adapted to request the delegate to authenticate himself by employing a challenge-response protocol on the basis of said private key,
said identity provider is configured to perform an authorization of the delegate based on said authorization rules.

10. System according to claim 9, wherein said authorization rules defined for a delegate include resource access restrictions.

11. System according to claim 9 or 10, including an Identity Management System for performing users' account management.

## Patentansprüche

1. Verfahren zum Durchführen einer Delegation von Ressourcen, wobei ein Nutzer - Ressourcenbesitzer - Zugriff auf eine von einem Dienstanbieter angebotene Ressource hat und wobei die Ressource unter Verwendung von Delegierungsberechtigungsnachweisen, die von dem Dienstanbieter ausgegeben werden und einen privaten Schlüssel umfassen, an mindestens einen anderen Nutzer - Delegierter - delegiert wird,
**dadurch gekennzeichnet, dass** das Verfahren die folgenden Schritte umfasst:
der Ressourcenbesitzer verwendet die Delegierungsberechtigungsnachweise zum Konfigurieren von Autorisierungsregeln für einen Delegierten bei einem Identitätsprovider und gibt den privaten Schlüssel an den Delegierten,
der Dienstanbieter authentifiziert den Delegierten basierend auf den Delegierungsberechtigungsnachweisen, wobei der Dienstanbieter, nachdem der Delegierte den Dienstanbieter wegen einer Ressource kontaktiert hat, den Identitätsprovider kontaktiert, um den Delegierten zu authentifizieren, und wobei der Dienstanbieter nach erfolgreicher Authentifizierung durch den Identitätsprovider den Delegierten auffordert, sich zu authentifizieren, indem er ein Challenge-Response-Protokoll auf der Basis des privaten Schlüssels verwendet, und
eine Autorisierung des Delegierten wird bei dem Identitätsprovider basierend auf den Autorisierungsregeln durchgeführt.

2. Verfahren nach Anspruch 1, wobei die Autorisierungsregeln, die für einen Delegierten definiert sind, Ressourcenzugriffsbeschränkungen umfassen.

3. Verfahren nach Anspruch 1 oder 2, wobei Nutzerkonten bei dem Identitätsprovider bereitgestellt werden, wobei jedes Konto mit einer anderen digitalen Identität des Nutzers verknüpft ist.

4. Verfahren nach Anspruch 3, wobei die Autorisierungsregeln, die für einen Delegierten definiert sind, in einer im Hinblick auf die digitale Identität spezifischen Weise definiert sind.

5. Verfahren nach Anspruch 3 oder 4, wobei die Authentifizierung des Delegierten bei dem Dienstanbieter auf der digitalen Identität des Delegierten basiert.

6. Verfahren nach einem der Ansprüche 1 bis 5, wobei die Autorisierungsregeln auf der Art der Ressource/des Dienstes, der Zeit, der Nutzerkosten der Ressource/ des Dienstes und/oder dergleichen basieren, und/oder
wobei sich die Autorisierungsregeln auf das Zulassen oder Verweigern einer weiteren Delegation beziehen.

7. Verfahren nach einem der Ansprüche 1 bis 6, wobei die Delegierungsberechtigungsnachweise ein Zertifikat und den privaten Schlüssel enthalten.

8. Verfahren nach einem der Ansprüche 1 bis 7, wobei die Autorisierungsinformation aggregiert für jeden Delegierten bei dem Identitätsprovider zentralisiert ist, und/oder
wobei die Autorisierungsinformation aggregiert für jeden Dienst bei dem Identitätsprovider zentralisiert ist.

9. System zum Durchführen einer Delegation von Ressourcen, wobei das System umfasst:
einen Dienstanbieter zum Anbieten einer Ressource, wobei ein Nutzer - Ressourcenbesitzer - Zugriff auf die Ressource hat und wobei die Ressource unter Verwendung von Delegierungsberechtigungsnachweisen, die von dem Dienstanbieter ausgegeben werden und einen privaten Schlüssel umfassen, an mindestens einen anderen Nutzer - Delegierter - delegiert wird,
**dadurch gekennzeichnet, dass** das System ferner umfasst
einen Identitätsprovider, der konfiguriert ist, einem Ressourcenbesitzer zu ermöglichen, die Delegierungsberechtigungsnachweise zum Konfigurieren von Autorisierungsregeln für einen Delegierten zu verwenden,
Mittel, um dem Ressourcenbesitzer zu ermöglichen, den privaten Schlüssel dem Delegierten zu geben,
wobei der Dienstanbieter konfiguriert ist, eine Authentifizierung des Delegierten basierend auf den Delegierungsberechtigungsnachweisen durchzuführen, wobei der Dienstanbieter eingerichtet ist, nachdem der Delegierte den Dienstanbieter wegen einer Ressource kontaktiert hat, den Identitätsprovider zu kontaktieren, um den Delegierten zu authentifizieren, und wobei der Dienstanbieter eingerichtet ist, nach erfolgreicher Authentifizierung durch den Identitätsprovider den Delegierten aufzufordern, sich zu authentifizieren, indem er ein Challenge-Response-Protokoll auf der Basis des privaten Schlüssels verwendet,
wobei der Identitätsprovider konfiguriert ist, eine Autorisierung des Delegierten basierend auf den Autorisierungsregeln durchzuführen.

10. System nach Anspruch 9, wobei die für einen Delegierten definierten Autorisierungsregeln Ressourcenzugriffsbeschränkungen umfassen.

11. System nach Anspruch 9 oder 10, umfassend ein Identitätsmanagementsystem zum Ausführen der Nutzerkontenverwaltung.

## Revendications

1. Procédé pour effectuer une délégation de ressources, dans lequel un utilisateur - détenteur de ressources - a accès à une ressource offerte par un fournisseur de services et dans lequel la ressource est déléguée à au moins un autre utilisateur - délégué - par l'utilisation d'une accréditation de délégation, émise par le fournisseur de services et comprenant une clé privée,
**caractérisé en ce que** le procédé comprend les étapes suivantes :
le détenteur de ressources emploie ladite accréditation de délégation pour configurer des règles d'autorisation pour un délégué au niveau d'un fournisseur d'identité et donne la clé privée au délégué,
le fournisseur de services authentifiant le délégué sur la base de ladite accréditation de délégation, dans lequel le fournisseur de services, lorsque le délégué contacte le fournisseur de services pour une ressource, contacte le fournisseur d'identité pour authentifier le délégué, et dans lequel, lors d'une authentification réussie par le fournisseur d'identité, le fournisseur de services demande au délégué de s'authentifier lui-même en employant un protocole de réponse à un défi sur la base de ladite clé privée, et
une autorisation du délégué est effectuée au niveau du fournisseur d'identité sur la base desdites règles d'autorisation.

2. Procédé selon la revendication 1, dans lequel lesdites règles d'autorisation définies pour un délégué incluent des restrictions d'accès aux ressources.

3. Procédé selon la revendication 1 ou 2, dans lequel des comptes utilisateurs sont fournis au niveau du fournisseur d'identité, chaque compte étant lié à une autre identité numérique de l'utilisateur.

4. Procédé selon la revendication 3, dans lequel lesdites règles d'autorisation définies pour un délégué sont définies d'une manière spécifique à l'identité numérique.

5. Procédé selon la revendication 3 ou 4, dans lequel l'authentification du délégué au niveau du fournisseur de services est basée sur l'identité numérique du délégué.

6. Procédé selon l'une quelconque des revendications 1 à 5, dans lequel lesdites règles d'autorisation sont basées sur le type de ressource/service, la durée, des coûts d'utilisateur en termes de ressources/services, et/ou similaires, et/ou
dans lequel lesdites règles d'autorisation ont trait à l'attribution ou au refus d'une délégation supplémentaire.

7. Procédé selon l'une quelconque des revendications 1 à 6, dans lequel ladite accréditation de délégation inclut un certificat et ladite clé privée.

8. Procédé selon l'une quelconque des revendications 1 à 7, dans lequel les informations d'autorisation sont centralisées au niveau du fournisseur d'identité regroupées pour chaque délégué, et/ou
dans lequel les informations d'autorisation sont centralisées au niveau du fournisseur d'identité regroupées pour chaque service.

9. Système pour effectuer une délégation de ressources, le système comprenant :
un fournisseur de services pour offrir une ressource, dans lequel un utilisateur - détenteur de ressources - a accès à la ressource, et dans lequel la ressource est déléguée à au moins un autre utilisateur - délégué - en utilisant une accréditation de délégation, émise par le fournisseur de services et comprenant une clé privée,
**caractérisé en ce que** le système comprend en outre
un fournisseur d'identité, qui est configuré pour permettre à un détenteur de ressources d'employer ladite accréditation de délégation pour configurer des règles d'autorisation pour un délégué,
des moyens permettant au détenteur de ressources de donner la clé privée au délégué,
ledit fournisseur de services est configuré pour effectuer une authentification du délégué sur la base de ladite accréditation de délégation, dans lequel le fournisseur de services, lorsque le délégué contacte le fournisseur de services pour une ressource, est adapté pour contacter le fournisseur d'identité pour authentifier le délégué, et dans lequel, lors d'une authentification réussie par le fournisseur d'identité, le fournisseur de services est adapté pour demander au délégué de s'authentifier lui-même en employant un protocole de réponse à un défi sur la base de ladite clé privée,
ledit fournisseur d'identité est configuré pour effectuer une autorisation du délégué sur la base desdites règles d'autorisation.

10. Système selon la revendication 9, dans lequel lesdites règles d'autorisation définies pour un délégué incluent des restrictions d'accès aux ressources.

11. Système selon la revendication 9 ou 10, incluant un système de gestion d'identité pour réaliser une gestion de comptes d'utilisateurs.
